# EUROPEAN PATENT SPECIFICATION

(11) **EP 3 835 473 B1**
(45) Date of publication and mention of the grant of the patent: **25.12.2024**
(21) Application number: 19924735.4
(22) Date of filing: 16.09.2019
(51) Int. Cl.: D06B 1/02, D06B 15/09, D06B 23/20, D06B 23/22, D06B 7/08

(54) **FELT PRODUCT MODIFYING AND DRYING DEVICE, AND OPERATION METHOD THEREOF**
VORRICHTUNG ZUM MODIFIZIEREN UND TROCKNEN VON FILZPRODUKTEN UND BETRIEBSVERFAHREN DAFÜR
DISPOSITIF DE MODIFICATION ET DE SÉCHAGE DE PRODUIT EN FEUTRE, ET SON PROCÉDÉ DE FONCTIONNEMENT

(30) Priority: 15.04.2019 CN 201910299405
(43) Date of publication of application: 16.06.2021
(73) Proprietor: Changzhou Fanqun Dry Equipment Co. Ltd., Changzhou, Jiangsu 213000 (CN)
(72) Inventor: FAN, Binghong, Changzhou, Jiangsu 213000 (CN); WANG, Jianxin, Changzhou, Jiangsu 213000 (CN); XIA, Mengliang, Changzhou, Jiangsu 213000 (CN); JIANG, Xiao, Changzhou, Jiangsu 213000 (CN); XU, Chuanhai, Changzhou, Jiangsu 213000 (CN)
(74) Representative: Zaboliene, Reda
(86) International application number: PCT/CN2019/105892
(87) International publication number: WO 2020/211278

(56) References cited:
- CN-A- 102 304 828
- CN-A- 103 471 371
- CN-A- 106 192 266
- CN-A- 108 842 295
- CN-A- 109 930 325
- CN-U- 202 369 786
- CN-U- 206 843 762
- CN-U- 208 562 821
- GB-A- 1 566 961
- US-A- 3 593 543
- US-A- 3 804 590

## Description

### TECHNICAL FIELD

The present invention relates to a felt product modifying and drying apparatus and a working method therefor.

### BACKGROUND

In a production process of a felt product, hydrophobic modification and drying are required. However, existing apparatuses have a poor effect and low efficiency on the modification and drying of the felt product, affect the quality of the felt product, have a low automation degree, highly depend on workers, and volatilize substances harmful to workers' health in the working process.

GB 1 566 961 A discloses an apparatus for continuous, essentially waterless dyeing textile or plastic materials that eliminates all polluting effluents. Therefore, the apparatus is divided into four sections. A dyeing section, a cooling and padding section, a washing section and a drying section. The non-dyed material is stored on a coil and continuously carried through the four sections. The continuous material is carried through the dyeing- and the cooling section by a tenter conveyor and through the washing and drying section by conveyor rolls, wherein the tenter conveyor allows the material to shrink in longitudinal and transverse direction. The rolls are arranged in a pair and act like squeeze rollers. After passing the drying section, the dyed and dried material is stored on a coil. To eliminate polluting effluents, filter circuits for liquids and air are arranged to each section.

The apparatus of CN 206 843 762 U is designed as a short-run dyeing machine. It also comprises a dyeing-, spraying-, washing- and drying section which are arranged next to each other in only one chamber. The four sections were separated by bulkheads which doesn't reach to the upper regions of the chamber.

### SUMMARY

The technical problem to be solved by the present invention is to overcome the defects in the prior art and provide a felt product modifying and drying apparatus being capable of well modifying and drying a felt product, having a high working efficiency and improving the product quality.

In order to solve the above technical problem, the present invention adopts the following technical solution: a felt product modifying and drying apparatus includes:
an unrolling device, configured to support a felt product roll and unroll the felt product roll;
a modifying tunnel machine, configured to modify a felt product unrolled by the unrolling device;
a water washing spraying device, configured to wash the felt product modified by the modifying tunnel machine with water;
a drying tunnel machine, configured to dry the felt product washed by the water washing spraying device with water;
a rolling device, configured to roll the felt product dried by the drying tunnel machine; and
a transmission device, penetrating through the modifying tunnel machine, the water washing spraying device and the drying tunnel machine and configured to transmit the felt product unrolled by the unrolling device to sequentially pass through the modifying tunnel machine, the water washing spraying device and the drying tunnel machine.

Further, in order to prevent a modifying solution and gas in the modifying tunnel machine, the water washing spraying device and the drying tunnel machine from being outwards leaked, the felt product modifying and drying apparatus further includes:
a first water sealing device, located between the unrolling device and the modifying tunnel machine, connected with a felt product inlet of the modifying tunnel machine, and configured to seal the felt product inlet of the modifying tunnel machine; and
a second water sealing device, located between the drying tunnel machine and the rolling device, connected with a felt product outlet of the drying tunnel machine, and configured to seal the felt product outlet of the drying tunnel machine, wherein
the felt product unrolled by the unrolling device passes through the first water sealing device and then enters the modifying tunnel machine;
the felt product going out from the drying tunnel machine passes through the second water sealing device and is then rolled by the rolling device; and
a felt product outlet of the modifying tunnel machine and a felt product inlet of the water washing spraying device are connected in a sealed manner, and a felt product outlet of the water washing spraying device and a felt product inlet of the drying tunnel machine are connected in a sealed manner.

A specific structure of the modifying tunnel machine is further provided. The modifying tunnel machine includes:
a modifying box, wherein a modifying solution is contained in the modifying box, and at least one section of the felt product on the transmission device located in the modifying box is immersed in the modifying solution;
at least one ultrasonic device, configured to accelerate a displacement speed of the modifying solution and an acid solution in the felt product and disposed in the modifying box;
a modifying solution circulation and heating system, connected with the modifying box and configured to extract the modifying solution from the modifying box, heat the extracted modifying solution and return the heated modifying solution to the modifying box; and
a modifying solution supplementing and acid solution collecting system, connected with the modifying box and configured to supplement the modifying solution into the modifying box and collect the acid solution obtained through displacement.

Specific structures of the modifying solution circulation and heating system and the modifying solution supplementing and acid solution collecting system are further provided. The modifying solution circulation and heating system includes a circulation heat exchanger, a solution inlet and a solution outlet of the circulation heat exchanger respectively communicate with the modifying box through circulation heat exchange pipes, a first pump unit is connected onto the circulation heat exchange pipe connected with the solution inlet of the circulation heat exchanger so as to enable the modifying solution in the modifying box to enter the circulation heat exchanger under the effect of the first pump unit and to return to the modifying box after being heated by the circulation heat exchanger, and the modifying solution circulation and heating system further includes a modifying solution filtering device connected between the modifying box and the first pump unit and configured to filter the modifying solution.

The modifying solution supplementing and acid solution collecting system includes an acid solution collecting tank, a modifying solution supplementing tank, a waste solution filtering device, a solution supplementing heat exchanger and at least one acid solution settling tank, the acid solution settling tank communicates with the bottom of the modifying box through a second pump unit so as to enable a waste solution settled at the bottom of the modifying box to enter the acid solution settling tank through the second pump unit, the waste solution filtering device is connected between the modifying box and the second pump unit so as to filter the waste solution discharged from the modifying box through the waste solution filtering device, the acid solution collecting tank communicates with the bottom of the acid solution settling tank through a third pump unit so as to collect the acid solution settled at the bottom of the acid solution settling tank through the acid solution collecting tank, a solution inlet of the modifying solution supplementing tank communicates with the top of the acid solution settling tank through a fourth pump unit so as to recover the modifying solution floating at an upper end portion of the acid solution settling tank, the solution inlet of the modifying solution supplementing tank further communicates with the external modifying solution supplementing system, a solution outlet of the modifying solution supplementing tank communicates with a solution inlet of the solution supplementing heat exchanger through a fifth pump unit, a solution outlet of the solution supplementing heat exchanger communicates with a head end of the modifying box, the solution outlet of the modifying solution supplementing tank further communicates with a tail end of the modifying box through a solution supplementing pipe, and top ends of the acid solution settling tank and the acid solution collecting tank respectively communicate with the solution supplementing pipe.

A specific structure of the water washing spraying device is further provided. The water washing spraying device includes:
a spraying box;
a spraying device, disposed in the spraying box and configured to spray water onto the felt product on the transmission device located in the water washing spraying device;
a spraying water filtering device, wherein a water inlet end of the spraying water filtering device communicates with a bottom end of the spraying box;
a water collecting device, communicating with a water outlet end of the spraying water filtering device and communicating with the spraying device through a circulation pump so as to supply water by the water collecting device to the spraying device through the circulation pump; and
an automatic water supplementing device, connected with the water collecting device and configured to supplement water to the water collecting device.

The spraying device includes a water supply pipe and a plurality of sprayers respectively communicating with the water supply pipe, the plurality of sprayers are divided into two groups, one group of sprayers are located above the felt product and are configured to spray water to an upper surface of the felt product, and the other group of sprayers are located under the felt product and are configured to spray water to a lower surface of the felt product.

A specific structure of the drying tunnel machine is further provided. The drying tunnel machine includes:
a drying box;
at least one hot air spraying device, configured to spray hot air to the felt product on the transmission device located in the drying box, disposed in the drying box, and including an upper hot air spraying pipe group configured to spray hot air to the upper surface of the felt product and a lower hot air spraying pipe group configured to spray hot air to the lower surface of the felt product, wherein each of the upper hot air spraying pipe group and the lower hot air spraying pipe group includes a plurality of hot air spraying pipes;
a main circulation system, connected between the drying box and the hot air spraying device and configured to extract air from the drying box, heat the extracted air into hot air and provide the hot air for the hot air spraying device; and
a branched circulation system, connected with the drying box and configured to extract air from the drying box and condense the extracted air to collect condensates.

Specific structures of the main circulation system and the branched circulation system are provided. The main circulation system includes at least one main circulation assembly, the main circulation assembly includes a main circulation fan and a heater, the main circulation fan is connected between the drying box and an air inlet of the heater so as to extract the air by the main circulation fan from the drying box to the heater, and an air outlet of the heater communicates with the hot air spraying device so as to heat the air extracted into the heater by the heater and transmit the air to the hot air spraying device.

The branched circulation system includes a condensate recovering system and at least one branched circulation assembly, the branched circulation assembly includes a branched circulation fan and a condenser, the branched circulation fan is connected between the drying box and an air inlet of the condenser so as to extract the air by the branched circulation fan from the drying box to the condenser, the condenser is configured to condense out condensates from the air extracted into the condenser, the condensate recovering system communicates with a condensate outlet of the condenser so as to collect the condensates, an air outlet of the condenser also communicates with the main circulation fan so as to extract cold air generating condensates into the heater to be heated through the main circulation fan.

Specific structures of the first water sealing device and the second water sealing device are further provided. Each of the first water sealing device and the second water sealing device includes a water tank, the water tank is provided with a V-shaped passage, a feeding opening communicating with one end portion of the V-shaped passage, and a discharging opening communicating with the other end portion of the V-shaped passage, the felt product enters the V-shaped passage from the feeding opening and passes out from the discharging opening, and water for isolating and sealing the feeding opening and the discharging opening is contained in the V-shaped passage.

The discharging opening of the first water sealing device is connected with the felt product inlet of the modifying tunnel machine in a sealed manner.

The feeding opening of the second water sealing device is connected with the felt product outlet of the drying tunnel machine in a sealed manner.

A plurality of support rollers configured to support the felt product are rotatably supported in the V-shaped passage along an extending direction of the V-shaped passage.

Two press rollers configured to crimp the felt product are rotatably supported at a bending position inside the V-shaped passage, one press roller is located at the left side of the lowermost support roller, and the other press roller is located at the right side of the lowermost support roller.

Further, in order to prevent dust from polluting a workshop environment, the felt product modifying and drying apparatus further includes a dust collecting device disposed on the rolling device and configured to collect dust generated in a process of rolling the felt product.

The present invention further provides a working method for a felt product modifying and drying apparatus according to claim 9.

By adopting the above technical solution, after the felt product roll is unrolled by the unrolling device, the transmission device sequentially transmits the unrolled felt product to the modifying tunnel machine, the water washing spraying device, the drying tunnel machine and the rolling device, in the felt product transmission process, the modifying tunnel machine modifies the felt product unrolled by the unrolling device, the water washing spraying device washes the felt product modified by the modifying tunnel machine with water, the drying tunnel machine dries the felt product washed by the water washing spraying device with water, and the rolling device rolls the felt product dried by the drying tunnel machine. According to the present invention, the felt product modifying and drying apparatus can complete modification and drying of the felt product very well, and achieves high product quality, high working efficiency, high automation degree and labor cost reduction. The modifying tunnel machine, the water washing spraying device and the drying tunnel machine of the present invention are connected in a sealed manner, additionally, the first water sealing device is disposed at a head section of the modifying tunnel machine, and the second water sealing device is disposed at the tail end of the drying tunnel machine, so that gas and the modifying solution in the modifying tunnel machine, the water washing spraying device and the drying tunnel machine can be well prevented from being outwards leaked. The present invention can further recover and utilize the modifying solution discharged along with the acid solution, so that the cost is reduced.

### BRIEF DESCRIPTION OF THE DRAWINGS

Fig. 1 is a schematic structure diagram of a felt product modifying and drying apparatus of the present invention.
Fig. 2 is a schematic structure diagram of a modifying tunnel machine of the present invention.
Fig. 3 is a schematic structure diagram of a water spraying device of the present invention.
Fig. 4 is a schematic structure diagram of a drying tunnel machine of the present invention.
Fig. 5 is a schematic structure diagram of a first water sealing device or a second water sealing device of the present invention.

### DETAILED DESCRIPTION OF THE EMBODIMENTS

In order that the present invention may be more easily and clearly understood, a further detailed illustration on the present invention is provided hereafter according to specific embodiments in conjunction with drawings.

### Embodiment 1

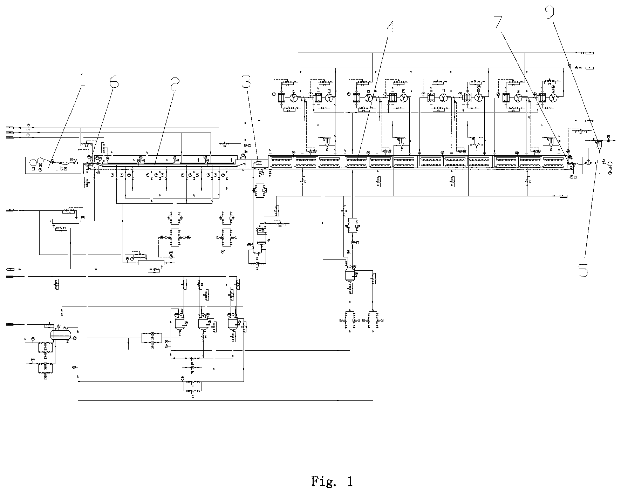

As shown in Fig. 1 to Fig. 5, a felt product modifying and drying apparatus includes:
an unrolling device 1, configured to support a felt product roll and unroll the felt product roll;
a modifying tunnel machine 2, configured to modify a felt product 10 unrolled by the unrolling device 1;
a water washing spraying device 3, configured to wash the felt product 10 modified by the modifying tunnel machine 2 with water;
a drying tunnel machine 4, configured to dry the felt product 10 washed by the water washing spraying device 3 with water;
a rolling device 5, configured to roll the felt product 10 dried by the drying tunnel machine 4; and
a transmission device, penetrating through the modifying tunnel machine 2, the water washing spraying device 3 and the drying tunnel machine 4 and configured to transmit the felt product 10 unrolled by the unrolling device 1 to sequentially pass through the modifying tunnel machine 2, the water washing spraying device 3 and the drying tunnel machine 4. In the present embodiment, the unrolling device 1, the rolling device 5 and the transmission device are all mature devices in the market, and are all prior art, so they are not described in detail herein.

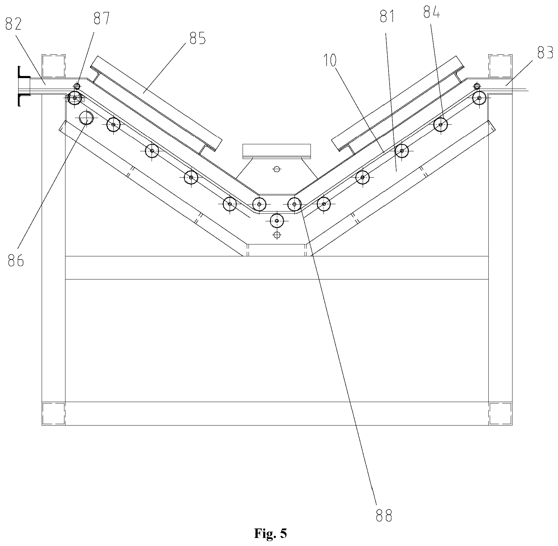

As shown in Fig. 1 and Fig. 5, in order to prevent a modifying solution and gas in the modifying tunnel machine 2, the water washing spraying device 3 and the drying tunnel machine 4 from being outwards leaked, the felt product modifying and drying apparatus further includes:
a first water sealing device 6, located between the unrolling device 1 and the modifying tunnel machine 2, connected with a felt product inlet of the modifying tunnel machine 2, and configured to seal the felt product inlet of the modifying tunnel machine 2; and
a second water sealing device 7, located between the drying tunnel machine 4 and the rolling device 5, connected with a felt product outlet of the drying tunnel machine 4, and configured to seal the felt product outlet of the drying tunnel machine 4.

The felt product 10 unrolled by the unrolling device 1 passes through the first water sealing device 6 and then enters the modifying tunnel machine 2.

The felt product 10 going out from the drying tunnel machine 4 passes through the second water sealing device 7 and is then rolled by the rolling device 5.

A felt product outlet of the modifying tunnel machine 2 and a felt product inlet of the water washing spraying device 3 are connected in a sealed manner, and a felt product outlet of the water washing spraying device 3 and a felt product inlet of the drying tunnel machine 4 are connected in a sealed manner.

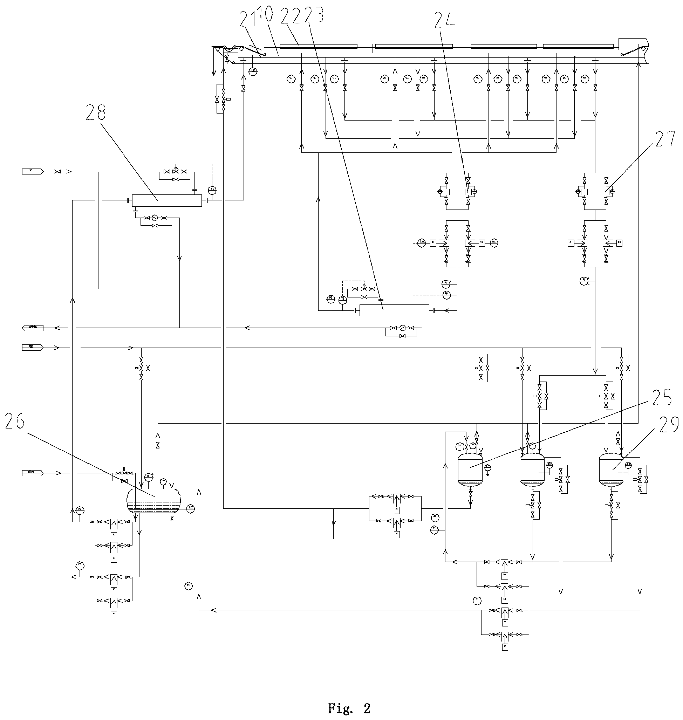

As shown in Fig. 1 and Fig. 2, the modifying tunnel machine 2 includes:
a modifying box 21, wherein a modifying solution is contained in the modifying box 21, and at least one section of the felt product 10 on the transmission device located in the modifying box 21 is immersed in the modifying solution;
at least one ultrasonic device 22, configured to accelerate a displacement speed of the modifying solution and an acid solution in the felt product 10 and disposed in the modifying box 21;
a modifying solution circulation and heating system, connected with the modifying box 21 and configured to extract the modifying solution from the modifying box 21, heat the extracted modifying solution and return the heated modifying solution to the modifying box 21; and
a modifying solution supplementing and acid solution collecting system, connected with the modifying box 21 and configured to supplement the modifying solution into the modifying box 21 and collect the acid solution obtained through displacement.

As shown in Fig. 1 and Fig. 2, the modifying solution circulation and heating system includes a circulation heat exchanger 23. A solution inlet and a solution outlet of the circulation heat exchanger 23 respectively communicate with the modifying box 21 through circulation heat exchange pipes. A first pump unit is connected onto the circulation heat exchange pipe connected with the solution inlet of the circulation heat exchanger 23 so as to enable the modifying solution in the modifying box 21 to enter the circulation heat exchanger 23 under the effect of the first pump unit and to return to the modifying box 21 after being heated by the circulation heat exchanger 23. The modifying solution circulation and heating system further includes a modifying solution filtering device 24 connected between the modifying box 21 and the first pump unit and configured to filter the modifying solution.

The modifying solution supplementing and acid solution collecting system includes an acid solution collecting tank 25, a modifying solution supplementing tank 26, a waste solution filtering device 27, a solution supplementing heat exchanger 28 and at least one acid solution settling tank 29. The acid solution settling tank 29 communicates with the bottom of the modifying box 21 through a second pump unit so as to enable a waste solution settled at the bottom of the modifying box 21 to enter the acid solution settling tank 29 through the second pump unit. The waste solution filtering device 27 is connected between the modifying box 21 and the second pump unit so as to filter the waste solution discharged from the modifying box 21 through the waste solution filtering device 27. The acid solution collecting tank 25 communicates with the bottom of the acid solution settling tank 29 through a third pump unit so as to collect the acid solution settled at the bottom of the acid solution settling tank 29 through the acid solution collecting tank 25. A solution inlet of the modifying solution supplementing tank 26 communicates with the top of the acid solution settling tank 29 through a fourth pump unit so as to recover the modifying solution floating at an upper end portion of the acid solution settling tank 29. The solution inlet of the modifying solution supplementing tank 26 further communicates with the external modifying solution supplementing system. A solution outlet of the modifying solution supplementing tank 26 communicates with a solution inlet of the solution supplementing heat exchanger 28 through a fifth pump unit. A solution outlet of the solution supplementing heat exchanger 28 communicates with a head end of the modifying box 21. The solution outlet of the modifying solution supplementing tank 26 further communicates with a tail end of the modifying box 21 through a solution supplementing pipe. Top ends of the acid solution settling tank 29 and the acid solution collecting tank 25 respectively communicate with the solution supplementing pipe. Specifically, the waste solution mainly includes the acid solution. However, there is the modifying solution mixed into the acid solution in the acid solution discharging process. In the present embodiment, the circulation heat exchanger 23 and the solution supplementing heat exchanger 28 are both graphite block hole type heat exchangers using steam as a heat medium and providing the heat medium in a unified way by using a steam supply system. The acid solution obtained through displacement in the modifying box 21 has high density, and is deposited at the bottom of the modifying box 21. In the modifying box 21, a lower layer is the acid solution, and the upper layer is the modifying solution. The circulation heat exchange pipe connected with the solution inlet of the circulation heat exchanger extends into the modifying solution layer of the modifying box 21, and the circulation heat exchange pipe connected with the solution outlet of the circulation heat exchanger extends into or out of the modifying solution layer of the modifying box 21. A solution supplementing pipe extends into a middle position of the modifying box 21 in a height direction.

The unrolled felt product 10 enters the modifying box 21, and moves in the modifying box 21 under the effect of the transmission device. A portion of the felt product 10 located in the modifying box 21 is immersed into the modifying solution, and the displacement speed of the modifying solution and the acid solution in the felt product 10 is accelerated by the ultrasonic device 22. In this process, the first pump unit of the modifying solution circulation and heating system pumps the modifying solution from the modifying box 21 to the circulation heat exchanger 23, the modifying solution indirectly heated by the circulation heat exchanger 23 returns to the modifying box 21, and waste solution settled at the bottom of the modifying box 21 is discharged into the settling tank 29 under the effect of the second pump unit. The displacement speed is further accelerated, and the displacement effect is ensured. The acid solution and the modifying solution discharged along with the acid solution are separated in the acid solution settling tank 29. Then, the acid solution is collected through the acid solution collecting tank 25. The modifying solution separated out from the acid solution settling tank 29 directly returns to the modifying box 21 or enters the modifying solution supplementing tank 26, the modifying solution is recovered and utilized, the modifying solution is saved, and the modification cost is reduced. There is loss of the modifying solution in the modifying box 21, the present invention supplements the modifying solution to the modifying box 21 through the modifying solution supplementing tank 26, and the automation degree is high.

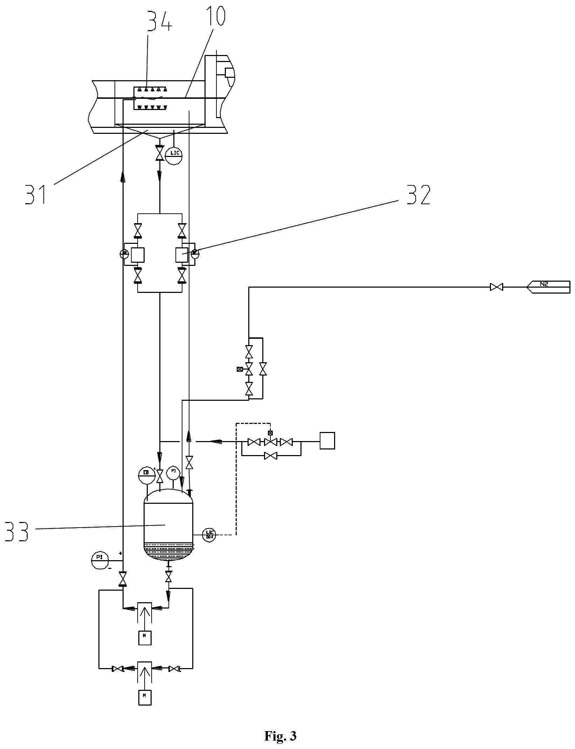

As shown in Fig. 1 and Fig. 3, the water washing spraying device 3 includes:
a spraying box 31;
a spraying device, disposed in the spraying box 31 and configured to spray water onto the felt product 10 on the transmission device located in the water washing spraying device 3;
a spraying water filtering device 32, wherein a water inlet end of the spraying water filtering device 32 communicates with a bottom end of the spraying box 31;
a water collecting device 33, communicating with a water outlet end of the spraying water filtering device 32 and communicating with the spraying device through a circulation pump so as to supply water by the water collecting device 33 to the spraying device through the circulation pump; and
an automatic water supplementing device, connected with the water collecting device 33 and configured to supplement water to the water collecting device 33.

The spraying device includes a water supply pipe and a plurality of sprayers 34 respectively communicating with the water supply pipe. The plurality of sprayers 34 are divided into two groups, one group of sprayers 34 are located above the felt product 10 and are configured to spray water to an upper surface of the felt product 10, and the other group of sprayers 34 are located under the felt product 10 and are configured to spray water to a lower surface of the felt product 10. In the present embodiment, in order to increase a spraying area and prolong retain time of water on the felt product 10, the felt product 10 located on the transmission device in the water washing spraying device 3 is in a V shape. The automatic water supplementing device includes a water supplementing box, an electromagnetic valve, a low-liquid-level switch and a high-liquid-level switch. The low-liquid-level switch is electrically connected with the electromagnetic valve, is located at a low-liquid-level position of the water collecting device 33, and is configured to trigger the electromagnetic valve to be opened when a liquid level in the water collecting device 33 descends to a low liquid level. The high-liquid-level switch is electrically connected with the electromagnetic valve, is located at a high-liquid-level position of the water collecting device 33, and is configured to trigger the electromagnetic valve to be closed when the liquid level in the water collecting device 33 ascends to a high liquid level. The electromagnetic valve is connected between the water supplementing box and the water collecting device 33, and is configured to control a break-and-make state between the water supplementing box and the water collecting device 33.

The spraying device sprays water to the felt product 10 to further flush away dirt on the surface of the felt product 10. Spraying water falls back into the spraying box 31. The spraying water collected in the spraying box 31 is filtered by the spraying water filtering device 32 and then enters the water collecting device 33. The water in the water collecting device 33 enters the spraying device under the effect of the circulation pump, and is then sprayed out through the sprayers 34. The present invention can cyclically utilize the spraying water, avoids the water waste, and reduces the spraying cost. The present invention further supplements water to the spraying device through the automatic water supplementing device. Under the condition of spraying water loss existence, the water collecting device 33 is stilled enabled to continuously supply water for the spraying device. The sprayers 34 of the present invention are divided into an upper group and a lower group. The upper surface and the lower surface of the felt product 10 are sprayed at the same time, and a water washing effect is ensured. Additionally, a section portion of the felt product 10 located at the spraying device is bent into a V shape, a spraying area is increased, the remaining time of the spraying water on the felt product 10 is prolonged, and the flushing effect is further ensured.

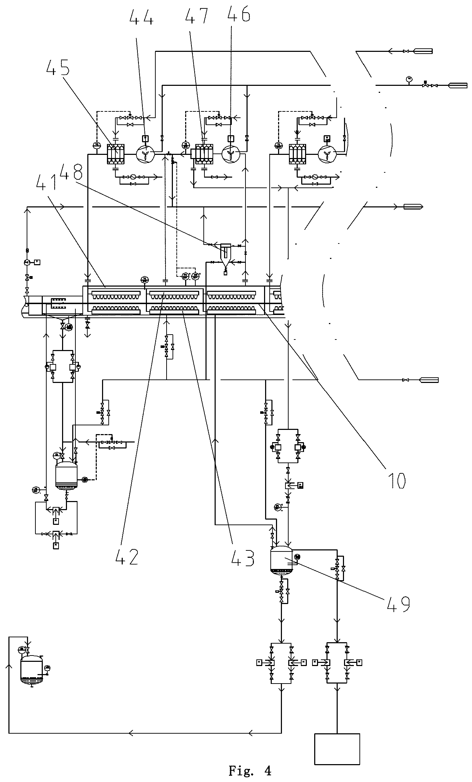

As shown in Fig. 1 and Fig. 4, the drying tunnel machine 4 includes:
a drying box 41;
at least one hot air spraying device, configured to spray hot air to the felt product 10 on the transmission device located in the drying box 41, disposed in the drying box 41, and including an upper hot air spraying pipe group 42 configured to spray hot air to the upper surface of the felt product 10 and a lower hot air spraying pipe group 43 configured to spray hot air to the lower surface of the felt product 10, wherein each of the upper hot air spraying pipe group 42 and the lower hot air spraying pipe group 43 includes a plurality of hot air spraying pipes;
a main circulation system, connected between the drying box 41 and the hot air spraying device and configured to extract air from the drying box 41, heat the extracted air into hot air and provide the hot air for the hot air spraying device; and
a branched circulation system, connected with the drying box 41 and configured to extract air from the drying box 41 and condense the extracted air to collect condensates.

As shown in Fig. 1 and Fig. 4, the main circulation system includes at least one main circulation assembly. The main circulation assembly includes a main circulation fan 44 and a heater 45. The main circulation fan 44 is connected between the drying box 41 and an air inlet of the heater 45 so as to extract the air by the main circulation fan 44 from the drying box 41 to the heater 45. An air outlet of the heater 45 communicates with the hot air spraying device so as to heat the air extracted into the heater 45 by the heater 45 and transmit the air to the hot air spraying device.

The branched circulation system includes a condensate recovering system 49 and at least one branched circulation assembly. The branched circulation assembly includes a branched circulation fan 46 and a condenser 47. The branched circulation fan 46 is connected between the drying box 41 and an air inlet of the condenser 47 so as to extract the air by the branched circulation fan 46 from the drying box 41 to the condenser 47. The condenser 47 is configured to condense out condensates from the air extracted into the condenser. The condensate recovering system 49 communicates with a condensate outlet of the condenser 47 so as to collect the condensates. An air outlet of the condenser 47 also communicates with the main circulation fan 44 so as to extract cold air generating condensates through the main circulation fan 44 into the heater 45 to be heated. In the present embodiment, a box wall of the drying box 41 sequentially includes an inner liner, a heat insulation layer and an outer wall from inside to outside. In order to perform dust removal on the gas in the drying box 41 and to avoid dust mixed in the condensates, the branched circulation fan 46 communicates with the drying box 41 through a cloth bag type dust collector 48.

The felt product 10 enters the drying box 41 after being washed by the water washing spraying device 3 with water. The felt product 10 is transmitted along the drying box 41 under the effect of the transmission device. In the moving process of the felt product 10 along the drying box 41, a plurality of hot air spraying pipes spray and blow hot air to the upper surface and the lower surface of the felt product 10 at the same time. Meanwhile, the main circulation system extracts the air from the drying box 41 to be heated, and provides the heated hot air for the hot air spraying device. The branched circulation system extracts the air from the drying box 41 to be condensed so as to condense out condensates from the air. The acid solution and the modifying solution are mixed in the condensates. The condensate recovering system 49 of the branched circulation system separates and respectively recovers the acid solution and the modifying solution in the condensates. The air cooled through the condenser 47 returns to the drying box 41 again after being heated by the main circulation system. The felt product modifying and drying apparatus of the present invention can dry the felt product 10 very well, can repeatedly utilize gas in the drying box 41, and can well recover the acid solution and the modifying solution. The present invention is reasonable in structure design and high in automation degree, reduces the manual participation degree, and avoids the harm to human bodies in a drying process of the felt product 10.

As shown in Fig. 1 and Fig. 5, each of the first water sealing device 6 and the second water sealing device 7 includes a water tank. The water tank is provided with a V-shaped passage 81, a feeding opening 82 communicating with one end portion of the V-shaped passage 81, and a discharging opening 83 communicating with the other end portion of the V-shaped passage 81. The felt product 10 enters the V-shaped passage 81 from the feeding opening 82 and passes out from the discharging opening 83. Water for isolating and sealing the feeding opening 82 and the discharging opening 83 is contained in the V-shaped passage 81.

The discharging opening 83 of the first water sealing device 6 is connected with the felt product inlet of the modifying tunnel machine 2 in a sealed manner.

The feeding opening 82 of the second water sealing device 7 is connected with the felt product outlet of the drying tunnel machine 4 in a sealed manner.

A plurality of support rollers 84 configured to support the felt product 10 are rotatably supported in the V-shaped passage 81 along an extending direction of the V-shaped passage 81.

Two press rollers 88 configured to crimp the felt product 10 are rotatably supported at a bending position inside the V-shaped passage 81. One press roller 88 is located at the left side of the lowermost support roller 84, and the other press roller 88 is located at the right side of the lowermost support roller 84. In the present embodiment, fixing shafts in one-to-one correspondence to the support rollers 84 and the press rollers 88 are disposed in the V-shaped passage 81. The support rollers 84 and the press rollers 88 are rotatablely sleeved on the corresponding fixing shafts. In order to conveniently add water into the V-shaped passage 81, at least one water adding opening communicating with the V-shaped passage 81 is formed in an upper wall of the water tank. A cover 85 is disposed on the water adding opening. The cover 85 is connected to the corresponding water adding opening through screw threads, or one end of the cover 85 is hinged onto the water tank. In order to avoid a condition that the V-shaped passage 81 is filled with too much water so that the water flows out from the feeding opening 82 and the discharging opening 83, an overflow opening 86 communicating with the V-shaped passage 81 is formed in a position of the water tank near the feeding opening 82 or the discharging opening 83. The located height of the overflow opening 86 is lower than the located height of the feeding opening 82 and the discharging opening 83. In order to conveniently install pressure difference sensors and further conveniently measure pressure differences between the feeding opening 82 and the discharging opening 83, pressure difference installing holes 87 for installing the pressure difference sensors are respectively disposed in positions of the water tank near the feeding opening 82 and the discharging opening 83, and the located height of the pressure difference installing holes 87 is higher than the located height of the overflow opening 86. In order to achieve automatic water addition when the water in the V-shaped passage 81 is consumed to the low liquid level, the water sealing device for the felt product modifying and drying apparatus further includes an automatic water supplementing device connected with the V-shaped passage 81 and configured to automatically supplement water for the V-shaped passage 81.

The V-shaped passage 81 is filled with water, a sealing effect is further achieved through the blockage by the water, and further, the leakage of the modifying solution and gas can be well avoided. The present invention is simple in structure, easy in implementation and low in cost. Support rollers 84 and press rollers 88 are disposed in the water tank. Therefore, the felt product 10 located in the V-shaped passage 81 can be tensioned, the felt product 10 can be well attached onto the support rollers 84, and resistance when the felt product 10 passes through the V-shaped passage 81 can be reduced. There is water loss in the V-shaped passage 81, the present invention further supplements water through the automatic water supplementing device, the sealing effect failure caused by too low liquid level is effectively avoided, artificial attendant and monitoring are also avoided, and convenience and labor saving are achieved.

In the present embodiment, as shown in Fig. 1, the felt product 10 has a serious dust falling phenomenon, so that obvious dust will be generated in a collection process by the rolling device 5. In order to prevent dust from polluting a workshop environment, the felt product modifying and drying apparatus further includes a dust collecting device 9 disposed on the rolling device 5 and configured to collect dust generated in a process of rolling the felt product 10. In the present embodiment, the dust collecting device 9 mainly includes a cloth bag type dust collector 48.

### Embodiment 2

A working method for the felt product modifying and drying apparatus according to Embodiment 1 includes the following steps:
Step S 1: a felt product roll is unrolled by the unrolling device 1.
Step S2: a felt product 10 unrolled by the unrolling device 1 is modified by the modifying tunnel machine 2.
Step S3: the felt product 10 modified by the modifying tunnel machine 2 is washed by the water washing spraying device 3 with water.
Step S4: the felt product 10 washed by the water washing spraying device 3 with water is dried by the drying tunnel machine 4.
Step S5: the felt product 10 dried by the drying tunnel machine 4 is rolled by the rolling device 5.

A working principle of the present invention is as follows:
After the felt product roll is unrolled by the unrolling device 1, the transmission device sequentially transmits the unrolled felt product 10 to the modifying tunnel machine 2, the water washing spraying device 3, the drying tunnel machine 4 and the rolling device 5. In the transmission process of the felt product 10, the modifying tunnel machine 2 modifies the felt product 10 unrolled by the unrolling device 1. The water washing spraying device 3 washes the felt product 10 modified by the modifying tunnel machine 2 with water. The drying tunnel machine 4 dries the felt product 10 washed by the water washing spraying device 3 with water. The rolling device 5 rolls the felt product 10 dried by the drying tunnel machine 4. The felt product modifying and drying apparatus of the present invention can complete modification and drying of the felt product 10 very well, and achieves high product quality, high working efficiency, high automation degree and labor cost reduction. The modifying tunnel machine 2, the water washing spraying device 3 and the drying tunnel machine 4 of the present invention are connected in a sealed manner. Additionally, the first water sealing device 6 is disposed at a head section of the modifying tunnel machine 2, and the second water sealing device 7 is disposed at the tail end of the drying tunnel machine 4, so that gas and the modifying solution in the modifying tunnel machine 2, the water washing spraying device 3 and the drying tunnel machine 4 can be well prevented from being outwards leaked. The present invention can further recover and utilize the modifying solution discharged along with the acid solution, so that the cost is reduced.

The specific embodiments described above further describe the solved technical problems, technical solutions and beneficial effects of the present invention in detail. It should be understood that the above descriptions are only specific embodiments of the present invention and are not intended to limit the present invention.

In the descriptions of the present invention, it should be understood that the terms indicating the orientation or the positional relationship are based on the orientation or the positional relationship shown in the drawings, are only for convenience of describing the present invention and simplifying the descriptions, are not intended to indicate or imply that the referenced apparatus or element must have a particular orientation, be constructed and operated in a particular orientation, and therefore cannot be understood as a limitation of the present invention.

In the present invention, unless otherwise clearly specified and defined, terms "install", "interconnect", "connect", "fix", etc. should be understood in a broad sense, for example, it may be connected in a fixed, detachable or integrated manner; it may be mechanically or electrically connected; it may be directly connected or indirectly connected via an intermediate media; and it may be communication inside two elements or an interaction relationship between two elements. For those of ordinary skill in the art, the specific meaning of the above-mentioned terms in the present invention may be understood according to specific circumstances.

In the descriptions of the present invention, it should be noted that terms "center", "upper", "lower", "left", "right", "vertical", "horizontal", "inner", "outer", etc. indicating the orientation or the positional relationship are based on the orientation or the positional relationship shown in the drawings, or the conventionally placed orientation or the positional relationship in a use process of a product of the present invention, are only for convenience of describing the present invention and simplifying the descriptions, are not intended to indicate or imply that the referenced apparatus or element must have a particular orientation, be constructed and operated in a particular orientation, and therefore cannot be understood as a limitation of the present invention. Additionally, terms "first", "second", "third", etc. are only used for distinguishing descriptions, and cannot be understood as indicating or implying relative importance.

Additionally, terms "horizontal", "vertical", "overhanging", etc. do not mean that the element is required to be absolutely horizontal or overhanging, but can be slightly inclined. For example, "horizontal" only means that its direction is more horizontal than "vertical", it does not mean that the structure must be completely horizontal, but can be slightly inclined.

In the present invention, unless otherwise clearly specified and defined, the first feature above or below the second feature may include the first and second features in direct contact, or may include the first and second features not in direct contact but in contact through another feature between them. Moreover, the first feature on, above and at the upper side of the second feature includes the first feature right above and obliquely above the second feature, or it simply represents that the height of the first feature is higher than that of the second feature. The first feature below, under and at the lower side of the second feature includes the first feature right under and obliquely under the second feature, or it simply represents that the height of the first feature is lower than that of the second feature.

## Claims

1. A felt product modifying and drying apparatus, comprising:
an unrolling device (1), configured to support a felt product roll and unroll the felt product roll;
a modifying tunnel machine (2), configured to modify a felt product (10) unrolled by the unrolling device (1);
a water washing spraying device (3), configured to wash the felt product (10) modified by the modifying tunnel machine (2) with water;
a drying tunnel machine (4), configured to dry the felt product (10) washed by the water washing spraying device (3) with water;
a rolling device (5), configured to roll the felt product (10) dried by the drying tunnel machine (4); and
a transmission device, penetrating through the modifying tunnel machine (2), the water washing spraying device (3) and the drying tunnel machine (4) and configured to transmit the felt product (10) unrolled by the unrolling device (1) to sequentially pass through the modifying tunnel machine (2), the water washing spraying device (3) and the drying tunnel machine (4),
wherein the modifying tunnel machine (2) comprises:
a modifying box (21), wherein a modifying solution is contained in the modifying box (21), and at least one section of the felt product (10) on the transmission device located in the modifying box (21) is immersed in the modifying solution;
at least one ultrasonic device (22), configured to accelerate a displacement speed of the modifying solution and an acid solution in the felt product (10) and disposed in the modifying box (21);
a modifying solution circulation and heating system, connected with the modifying box (21) and configured to extract the modifying solution from the modifying box (21), heat the extracted modifying solution and return the heated modifying solution to the modifying box (21); and
a modifying solution supplementing and acid solution collecting system, connected with the modifying box (21) and configured to supplement the modifying solution into the modifying box (21) and collect the acid solution obtained through displacement.

2. The felt product modifying and drying apparatus according to claim 1, further comprising:
a first water sealing device (6), located between the unrolling device (1) and the modifying tunnel machine (2), connected with a felt product inlet of the modifying tunnel machine (2), and configured to seal the felt product inlet of the modifying tunnel machine (2); and
a second water sealing device (7), located between the drying tunnel machine (4) and the rolling device (5), connected with a felt product outlet of the drying tunnel machine (4), and configured to seal the felt product outlet of the drying tunnel machine (4), wherein
the felt product (10) unrolled by the unrolling device (1) passes through the first water sealing device (6) and then enters the modifying tunnel machine (2);
the felt product (10) going out from the drying tunnel machine (4) passes through the second water sealing device (7) and is then rolled by the rolling device (5); and
a felt product outlet of the modifying tunnel machine (2) and a felt product inlet of the water washing spraying device (3) are connected in a sealed manner, and a felt product outlet of the water washing spraying device (3) and a felt product inlet of the drying tunnel machine (4) are connected in a sealed manner.

3. The felt product modifying and drying apparatus according to claim 1, wherein
the modifying solution circulation and heating system comprises a circulation heat exchanger (23), a solution inlet and a solution outlet of the circulation heat exchanger (23) respectively communicate with the modifying box (21) through circulation heat exchange pipes, a first pump unit is connected onto the circulation heat exchange pipe connected with the solution inlet of the circulation heat exchanger (23) so as to enable the modifying solution in the modifying box (21) to enter the circulation heat exchanger (23) under the effect of the first pump unit and to return to the modifying box (21) after being heated by the circulation heat exchanger (23), and the modifying solution circulation and heating system further comprises a modifying solution filtering device (24) connected between the modifying box (21) and the first pump unit and configured to filter the modifying solution;
the modifying solution supplementing and acid solution collecting system comprises an acid solution collecting tank (25), a modifying solution supplementing tank (26), a waste solution filtering device (27), a solution supplementing heat exchanger (28) and at least one acid solution settling tank (29), wherein the acid solution settling tank (29) communicates with the bottom of the modifying box (21) through a second pump unit so as to enable a waste solution settled at the bottom of the modifying box (21) to enter the acid solution settling tank (29) through the second pump unit; the waste solution filtering device (27) is connected between the modifying box (21) and the second pump unit so as to filter the waste solution discharged from the modifying box (21) through the waste solution filtering device (27); the acid solution collecting tank (25) communicates with the bottom of the acid solution settling tank (29) through a third pump unit so as to collect the acid solution settled at the bottom of the acid solution settling tank (29) through the acid solution collecting tank (25); and a solution inlet of the modifying solution supplementing tank (26) communicates with the top of the acid solution settling tank (29) through a fourth pump unit so as to recover the modifying solution floating at an upper end portion of the acid solution settling tank (29), the solution inlet of the modifying solution supplementing tank (26) further communicates with the external modifying solution supplementing system, a solution outlet of the modifying solution supplementing tank (26) communicates with a solution inlet of the solution supplementing heat exchanger (28) through a fifth pump unit, a solution outlet of the solution supplementing heat exchanger (28) communicates with a head end of the modifying box (21), the solution outlet of the modifying solution supplementing tank (26) further communicates with a tail end of the modifying box (21) through a solution supplementing pipe, and top ends of the acid solution settling tank (29) and the acid solution collecting tank (25) respectively communicate with the solution supplementing pipe.

4. The felt product modifying and drying apparatus according to claim 1, wherein the water washing spraying device (3) comprises:
a spraying box (31);
a spraying device, disposed in the spraying box (31) and configured to spray water onto the felt product (10) on the transmission device located in the water washing spraying device (3);
a spraying water filtering device (32), wherein a water inlet end of the spraying water filtering device (32) communicates with a bottom end of the spraying box (31);
a water collecting device (33), communicating with a water outlet end of the spraying water filtering device (32) and communicating with the spraying device through a circulation pump so as to supply water by the water collecting device (33) to the spraying device through the circulation pump; and
an automatic water supplementing device, connected with the water collecting device (33) and configured to supplement water to the water collecting device (33), wherein
the spraying device comprises a water supply pipe and a plurality of sprayers (34) respectively communicating with the water supply pipe, the plurality of sprayers (34) are divided into two groups, one group of sprayers (34) are located above the felt product (10) and are configured to spray water to an upper surface of the felt product (10), and the other group of sprayers (34) are located under the felt product (10) and are configured to spray water to a lower surface of the felt product (10).

5. The felt product modifying and drying apparatus according to claim 1, wherein the drying tunnel machine (4) comprises:
a drying box (41);
at least one hot air spraying device, configured to spray hot air to the felt product (10) on the transmission device located in the drying box (41), disposed in the drying box (41), and comprising an upper hot air spraying pipe group (42) configured to spray hot air to the upper surface of the felt product (10) and a lower hot air spraying pipe group (43) configured to spray hot air to the lower surface of the felt product (10), wherein each of the upper hot air spraying pipe group (42) and the lower hot air spraying pipe group (43) comprises a plurality of hot air spraying pipes;
a main circulation system, connected between the drying box (41) and the hot air spraying device and configured to extract air from the drying box (41), heat the extracted air into hot air and provide the hot air for the hot air spraying device; and
a branched circulation system, connected with the drying box (41) and configured to extract air from the drying box (41) and condense the extracted air to collect condensates.

6. The felt product modifying and drying apparatus according to claim 5, wherein
the main circulation system comprises at least one main circulation assembly, wherein the main circulation assembly comprises a main circulation fan (44) and a heater (45), the main circulation fan (44) is connected between the drying box (41) and an air inlet of the heater (45) so as to extract the air by the main circulation fan (44) from the drying box (41) to the heater (45), and an air outlet of the heater (45) communicates with the hot air spraying device so as to heat the air extracted into the heater (45) by the heater (45) and transmit the air to the hot air spraying device; and
the branched circulation system comprises a condensate recovering system (49) and at least one branched circulation assembly, wherein the branched circulation assembly comprises a branched circulation fan (46) and a condenser (47), the branched circulation fan (46) is connected between the drying box (41) and an air inlet of the condenser (47) so as to extract the air by the branched circulation fan (46) from the drying box (41) to the condenser (47), the condenser (47) is configured to condense out condensates from the air extracted into the condenser, the condensate recovering system (49) communicates with a condensate outlet of the condenser (47) so as to collect the condensates, an air outlet of the condenser (47) also communicates with the main circulation fan (44) so as to extract cold air generating condensates through the main circulation fan (44) into the heater (45) to be heated.

7. The felt product modifying and drying apparatus according to claim 2, wherein each of the first water sealing device (6) and the second water sealing device (7) comprises a water tank, the water tank is provided with a V-shaped passage (81), a feeding opening (82) communicating with one end portion of the V-shaped passage (81), and a discharging opening (83) communicating with the other end portion of the V-shaped passage (81), the felt product (10) enters the V-shaped passage (81) from the feeding opening (82) and passes out from the discharging opening (83), and water for isolating and sealing the feeding opening (82) and the discharging opening (83) is contained in the V-shaped passage (81), wherein
the discharging opening (83) of the first water sealing device (6) is connected with the felt product inlet of the modifying tunnel machine (2) in a sealed manner;
the feeding opening (82) of the second water sealing device (7) is connected with the felt product outlet of the drying tunnel machine (4) in a sealed manner;
a plurality of support rollers (84) configured to support the felt product (10) are rotatably supported in the V-shaped passage (81) along an extending direction of the V-shaped passage (81); and
two press rollers (88) configured to crimp the felt product (10) are rotatably supported at a bending position inside the V-shaped passage (81), one press roller (88) is located at the left side of the lowermost support roller (84), and the other press roller (88) is located at the right side of the lowermost support roller (84).

8. The felt product modifying and drying apparatus according to claim 1, further comprising a dust collecting device (9) disposed on the rolling device (5) and configured to collect dust generated in a process of rolling the felt product (10).

9. A working method for the felt product modifying and drying apparatus as defined in any one of claims 1-8, comprising the following steps:
step S 1: unrolling, by the unrolling device (1), a felt product roll;
step S2: modifying, by the modifying tunnel machine (2), a felt product (10) unrolled by the unrolling device (1);
step S3: washing, by the water washing spraying device (3), the felt product (10) modified by the modifying tunnel machine (2) with water;
step S4: drying, by the drying tunnel machine (4), the felt product (10) washed by the water washing spraying device (3) with water; and
step S5: rolling, by the rolling device (5), the felt product (10) dried by the drying tunnel machine (4).
wherein step S2 comprises:
- immersing at least a section of the felt product (10) in the modifying solution;
- accelerating a displacement speed of the modifying solution and an acid solution in the felt product (10) and disposing in the modifying box (21);
- extracting the modifying solution from the modifying box, heating the extracted modifying solution and returning the heated modifying solution to the modifying box (21); and
- collecting the modifying solution supplementing and acid solution supplementing the modifying solution into the modifying box (21) and collecting the acid solution obtained through displacement.

## Patentansprüche

1. Die Vorrichtung zum Modifizieren und Trocknen von Filzprodukten, umfassend:
eine Abrollvorrichtung (1), die so konfiguriert ist, dass sie eine Filzproduktrolle stützt und die Filzproduktrolle abrollt;
eine Modifizierungstunnelmaschine (2), die so konfiguriert ist, dass sie ein von der Abrollvorrichtung (1) abgerolltes Filzprodukt (10) modifiziert;
eine Wasserwasch-Sprühvorrichtung (3), die dazu konfiguriert ist, das von der Modifizierungstunnelmaschine (2) modifizierte Filzprodukt (10) mit Wasser zu waschen;
eine Trocknungstunnelmaschine (4), die dazu konfiguriert ist, das von der Wasserwasch - Sprühvorrichtung (3) gewaschene Filzprodukt (10) mit Wasser zu trocknen;
eine Rollvorrichtung (5), die dazu konfiguriert ist, das von der Trocknungstunnelmaschine (4) getrocknete Filzprodukt (10) aufzurollen; und
eine Übertragungsvorrichtung, die durch die Modifizierungstunnelmaschine (2), die Wasserwasch-Sprühvorrichtung (3) und die Trocknungstunnelmaschine (4) hindurchgeht und dazu konfiguriert ist, das von der Abrollvorrichtung (1) abgerollte Filzprodukt (10) zu übertragen, um es nacheinander durch die Modifizierungstunnelmaschine (2), die Wasserwasch-Sprühvorrichtung (3) und die Trocknungstunnelmaschine (4) zu führen,
wobei die Modifizierungstunnelmaschine (2) umfasst:
eine Modifizierungsbox (21), wobei in der Modifizierungsbox (21) eine Modifizierungslösung enthalten ist und mindestens ein Abschnitt des Filzprodukts (10) auf der in der Modifizierungsbox (21) angeordneten Übertragungsvorrichtung in die Modifizierungslösung eingetaucht ist;
mindestens eine Ultraschallvorrichtung (22), die dazu konfiguriert ist, eine Bewegungsgeschwindigkeit der Modifizierungslösung und einer Säurelösung im Filzprodukt (10) zu beschleunigen und in der Modifizierungsbox (21) angeordnet ist;
ein Zirkulations- und Heizsystem für die Modifizierungslösung, das mit der Modifizierungsbox (21) verbunden ist und so konfiguriert ist, dass es die Modifizierungslösung aus der Modifizierungsbox (21) extrahiert, die extrahierte Modifizierungslösung erhitzt und die erhitzte Modifizierungslösung in die Modifizierungsbox (21) zurückführt; und
ein Modifizierungslösungsergänzungs- und Säurelösungssammelsystem, das mit der Modifizierungsbox (21) verbunden ist und so konfiguriert ist, dass es die Modifizierungslösung in die Modifizierungsbox (21) einspeist und die durch Verdrängung erhaltene Säurelösung sammelt.

2. Die Vorrichtung zum Modifizieren und Trocknen von Filzprodukten nach Anspruch 1, die außerdem Folgendes umfasst:
eine erste Wasserdichtungsvorrichtung (6), die sich zwischen der Abrollvorrichtung (1) und der Modifizierungstunnelmaschine (2) befindet, mit einem Filzprodukteinlass der Modifizierungstunnelmaschine (2) verbunden ist und so konfiguriert ist, dass sie den Filzprodukteinlass der Modifizierungstunnelmaschine (2) abdichtet; und
eine zweite Wasserabdichtungsvorrichtung (7), die zwischen der Trocknungstunnelmaschine (4) und der Rollvorrichtung (5) angeordnet ist, mit einem Filzproduktauslass der Trocknungstunnelmaschine (4) verbunden ist und dazu konfiguriert ist, den Filzproduktauslass der Trocknungstunnelmaschine (4) abzudichten, wobei
das von der Abrollvorrichtung (1) abgerollte Filzprodukt (10) die erste Wasserdichtungsvorrichtung (6) durchläuft und dann in die Modifizierungstunnelmaschine (2) gelangt;
das Filzprodukt (10), dass aus der Trocknungstunnelmaschine (4) austritt und die zweite Wasserabdichtungsvorrichtung (7) durchläuft und dann es von der Rollvorrichtung (5) aufgerollt wird; und
ein Filzproduktauslass der Modifizierungstunnelmaschine (2) und ein Filzprodukteinlass der Wasserwasch-Sprühvorrichtung (3) sind abgedichtet verbunden, und ein Filzproduktauslass der Wasserwasch-Sprühvorrichtung (3) und ein Filzprodukteinlass der Trocknungstunnelmaschine (4) sind abgedichtet verbunden.

3. Die Modifizierungs- und Trocknungsvorrichtung für Filzprodukte nach Anspruch 1, wobei
das Zirkulations- und Heizsystem für die Modifizierungslösung einen Zirkulationswärmetauscher (23) umfasst, wobei ein Lösungseinlass und ein Lösungsauslass des Zirkulationswärmetauschers (23) jeweils über Zirkulation Wärmetauscher Rohre mit der Modifizierungsbox (21) verbunden sind, eine erste Pumpeneinheit an das Zirkulation Wärmetauscher Rohr angeschlossen ist, das mit dem Lösungseinlass des Zirkulationswärmetauschers (23) verbunden ist, um es der Modifizierungslösung in der Modifizierungsbox (21) zu ermöglichen, unter der Wirkung der ersten Pumpeneinheit in den Zirkulationswärmetauscher (23) einzutreten und nach Erhitzung durch den Zirkulationswärmetauscher (23) in die Modifizierungsbox (21) zurückzukehren, und das Zirkulations- und Heizsystem für die Modifizierungslösung ferner eine Filtervorrichtung (24) für die Modifizierungslösung umfasst, die zwischen der Modifizierungsbox (21) und der ersten Pumpeneinheit angeschlossen ist und zum Filtern der Modifizierungslösung konfiguriert ist;
das Modifizierungslösungsergänzungs- und Säurelösungssammelsystem umfasst einen Säurelösungs-Sammeltank (25), einen Modifizierungslösungsergänzungstank (26), eine Abfalllösungsfiltervorrichtung (27), einen Lösungsergänzungswärmetauscher (28) und mindestens einen Säurelösungsabsetztank (29), wobei der Säurelösungsabsetztank (29) durch eine zweite Pumpeneinheit mit dem Boden der Modifizierungsbox (21) in Verbindung steht, um einer am Boden der Modifizierungsbox (21) abgesetzten Abfalllösung zu ermöglichen, durch die zweite Pumpeneinheit in den Säurelösungsabsetztank (29) zu gelangen; die Abfalllösungsfiltervorrichtung (27) ist zwischen der Modifizierungsbox (21) und der zweiten Pumpeneinheit angeschlossen, um die aus der Modifizierungsbox (21) durch die Abfalllösungsfiltervorrichtung (27) abgelassene Abfalllösung zu filtern; der Säurelösungs-Sammeltank (25) ist über eine dritte Pumpeneinheit mit dem Boden des Säurelösungsabsetztanks (29) verbunden, um die am Boden des Säurelösungs-Absetztanks (29) abgesetzte Säurelösung über den Säurelösungs-Sammeltank (25) zu sammeln; und ein Lösungseinlass des Modifizierungslösungsergänzungstanks (26) ist über eine vierte Pumpeneinheit mit der Oberseite des Säurelösungsabsetztanks (29) verbunden, um die an einem oberen Endabschnitt des Säurelösungsabsetztanks (29) schwimmende Modifizierungslösung zurückzugewinnen, der Lösungseinlass des Modifizierungslösungsergänzungstanks (26) ist außerdem mit dem externen Modifizierungslösungsergänzungssystem verbunden, ein Lösungsauslass des Modifizierungslösungsergänzungstanks (26) ist über eine fünfte Pumpeneinheit mit einem Lösungseinlass des Lösungsergänzungswärmetauschers (28) verbunden, ein Lösungsauslass des Lösungsergänzungswärmetauschers (28) ist mit einem Kopfende der Modifizierungsbox (21) verbunden, der Lösungsauslass des Modifizierungslösungsergänzungstanks (26) ist außerdem über ein Lösungsergänzungsrohr mit einem Hinterende der Modifizierungsbox (21) verbunden, und die oberen Enden des Säurelösungsabsetztanks (29) und des Säurelösungs-Sammeltanks (25) sind jeweils mit dem Lösungsergänzungsrohr verbunden.

4. Die Vorrichtung zum Modifizieren und Trocknen von Filzprodukten nach Anspruch 1, wobei die Wasserwasch-Sprühvorrichtung (3) umfasst:
eine Sprühbox (31);
eine Sprühvorrichtung, die in der Sprühbox (31) angeordnet ist und dazu konfiguriert ist, Wasser auf das Filzprodukt (10) auf der Übertragungsvorrichtung zu sprühen, die sich in der Wasserwasch-Sprühvorrichtung (3) befindet;
eine Sprühwasserfiltervorrichtung (32), wobei ein Wassereinlassende der Sprühwasserfiltervorrichtung (32) mit einem unteren Ende der Sprühbox (31) in Verbindung steht;
eine Wassersammelvorrichtung (33), die mit einem Wasserauslassende der Sprühwasserfiltervorrichtung (32) in Verbindung steht und über eine Umwälzpumpe mit der Sprühvorrichtung in Verbindung steht, um Wasser von der Wassersammelvorrichtung (33) über die Umwälzpumpe an die Sprühvorrichtung zu liefern; und
eine automatische Wasserergänzungsvorrichtung, die mit der Wassersammelvorrichtung (33) verbunden ist und dazu konfiguriert ist, der Wassersammelvorrichtung (33) Wasser zuzuführen, wobei die Sprühvorrichtung eine Wasserversorgungsleitung und eine Vielzahl von Sprühern (34) umfasst, die jeweils mit der Wasserversorgungsleitung in Verbindung stehen, wobei die Vielzahl von Sprühern (34) in zwei Gruppen unterteilt ist, wobei sich eine Gruppe von Sprühern (34) über dem Filzprodukt (10) befindet und dazu konfiguriert ist, Wasser auf eine obere Oberfläche des Filzprodukts (10) zu sprühen, und wobei sich die andere Gruppe von Sprühern (34) unter dem Filzprodukt (10) befindet und dazu konfiguriert ist, Wasser auf eine untere Oberfläche des Filzprodukts (10) zu sprühen.

5. Die Vorrichtung zum Modifizieren und Trocknen von Filzprodukten nach Anspruch 1, wobei die Trocknungstunnelmaschine (4) umfasst:
eine Trockenbox (41);
mindestens eine Heißluftsprühvorrichtung, die dazu konfiguriert ist, Heißluft auf das Filzprodukt (10) auf der Übertragungsvorrichtung zu sprühen, die sich in der Trockenbox (41) befindet, und die in der Trockenbox (41) angeordnet ist und eine obere Heißluftsprührohrgruppe (42) umfasst, die dazu konfiguriert ist, Heißluft auf die obere Oberfläche des Filzprodukts (10) zu sprühen, und eine untere Heißluftsprührohrgruppe (43), die dazu konfiguriert ist, die Heißluft auf die untere Oberfläche des Filzprodukts (10) zu sprühen, wobei jede der oberen Heißluftsprührohrgruppen (42) und der unteren Heißluftsprührohrgruppen (43) eine Vielzahl von Heißluftsprührohren umfasst;
ein Hauptzirkulationssystem, das zwischen der Trockenbox (41) und der Heißluft-Sprühvorrichtung angeschlossen ist und dazu konfiguriert ist, Luft aus der Trockenbox (41) abzusaugen, die abgesaugte Luft zu Heißluft zu erhitzen und die Heißluft für die Heißluft-Sprühvorrichtung bereitzustellen; und
ein verzweigtes Zirkulationssystem, das mit der Trockenbox (41) verbunden ist und dazu konfiguriert ist, Luft aus der Trockenbox (41) abzusaugen und die abgesaugte Luft zu kondensieren, um Kondenswasser zu sammeln.

6. Die Vorrichtung zum Modifizieren und Trocknen von Filzprodukten nach Anspruch 5, wobei das Hauptzirkulationssystem mindestens eine Hauptzirkulationsbaugruppe umfasst, wobei die Hauptzirkulationsbaugruppe einen Hauptzirkulationsventilator (44) und eine Heizung (45) umfasst, der Hauptzirkulationsventilator (44) zwischen der Trockenbox (41) und einem Lufteinlass der Heizung (45) angeschlossen ist, um die Luft durch den Hauptzirkulationsventilator (44) aus der Trockenbox (41) zur Heizung (45) abzusaugen, und ein Luftauslass der Heizung (45) mit der Heißluftsprühvorrichtung in Verbindung steht, um die durch die Heizung (45) in die Heizung (45) abgesaugte Luft zu erhitzen und die Luft zur Heißluftsprühvorrichtung zu übertragen; und
das verzweigte Zirkulationssystem umfasst ein Kondensat Rückgewinnungssystem (49) und mindestens eine verzweigte Zirkulationsanordnung, wobei die verzweigte Zirkulationsanordnung einen verzweigten Zirkulationsventilator (46) und einen Kondensator (47) umfasst, der verzweigte Zirkulationsventilator (46) zwischen der Trockenbox (41) und einem Lufteinlass des Kondensators (47) angeschlossen ist, um die Luft durch den verzweigten Zirkulationsventilator (46) aus der Trockenbox (41) zum Kondensator (47) abzusaugen, der Kondensator (47) so konfiguriert ist, dass er Kondensate aus der in den Kondensator abgesaugten Luft auskondensiert, das Kondensat Rückgewinnungssystem (49) mit einem Kondensat Auslass des Kondensators (47) kommuniziert, um die Kondensate zu sammeln, ein Luftauslass des Kondensators (47) auch mit dem Hauptzirkulationsventilator (44) kommuniziert, um kalte Luft, die Kondensate erzeugt, durch den Hauptzirkulationsventilator (44) in die zu erwärmende Heizung (45) abzusaugen.

7. Die Vorrichtung zum Modifizieren und Trocknen von Filzprodukten nach Anspruch 2, wobei die erste Wasserdichtungsvorrichtung (6) und die zweite Wasserabdichtungsvorrichtung (7) jeweils einen Wassertank umfassen, der Wassertank mit einem V-förmigen Durchgang (81), einer Zufuhröffnung (82), die mit einem Endabschnitt des V-förmigen Durchgangs (81) in Verbindung steht, und einer Abflussöffnung (83), die mit dem anderen Endabschnitt des V-förmigen Durchgangs (81) in Verbindung steht, versehen ist, das Filzprodukt (10) von der Zufuhröffnung (82) in den V-förmigen Durchgang (81) eintritt und von der Abflussöffnung (83) austritt, und Wasser zum Isolieren und Abdichten der Zufuhröffnung (82) und der Abflussöffnung (83) in dem V-förmigen Durchgang (81) enthalten ist, wobei
die Auslassöffnung (83) der ersten Wasserdichtungsvorrichtung (6) abgedichtet und mit dem Filzprodukteinlass der Modifizierungstunnelmaschine (2) verbunden ist;
die Zufuhröffnung (82) der zweiten Wasserabdichtungsvorrichtung (7) abgedichtet und mit dem Filzprodukteinlass der Trocknungstunnelmaschine (4) verbunden ist;
die Vielzahl von Stützrollen (84), die so konfiguriert sind, dass sie das Filzprodukt (10) stützen, sind drehbar in dem V-förmigen Durchgang (81) entlang einer Ausdehnungsrichtung des V-förmigen Durchgangs (81) gelagert; und
zwei Pressrollen (88), die so konfiguriert sind, dass sie das Filzprodukt (10) kräuseln, sind drehbar an einer Biegeposition innerhalb des V-förmigen Durchgangs (81) gelagert, wobei sich eine Pressrolle (88) auf der linken Seite der untersten Stützrolle (84) befindet und die andere Pressrolle (88) sich auf der rechten Seite der untersten Stützrolle (84) befindet.

8. Die Vorrichtung zum Modifizieren und Trocknen eines Filzprodukts nach Anspruch 1, die außerdem eine Staubsammelvorrichtung (9) umfasst, die an der Rollvorrichtung (5) angeordnet und zum Auffangen von Staub konfiguriert ist, der beim Rollvorgang des Filzprodukts (10) entsteht.

9. Das Verfahren zur Herstellung einer Vorrichtung zum Modifizieren und Trocknen von Filzprodukten nach einem der Ansprüche 1 bis 8, das die folgenden Schritte umfasst:
Schritt S1: das Abrollen einer Filzproduktrolle durch die Abrollvorrichtung (1);
Schritt S2: das Modifizieren eines durch die Abrollvorrichtung (1) abgerollten Filzprodukts (10) durch die Modifizierungstunnelmaschine (2);
Schritt S3: das Waschen des durch die Modifizierungstunnelmaschine (2) modifizierten Filzprodukts (10) mit Wasser durch die Wasserwasch-Sprühvorrichtung (3);
Schritt S4: das Trocknen des durch die Wasserwasch-Sprühvorrichtung (3) mit Wasser gewaschenen Filzprodukts (10) durch die Trocknungstunnelmaschine (4); und
Schritt S5: das Rollen des durch die Trocknungstunnelmaschine (4) getrockneten Filzprodukts (10) durch die Rollvorrichtung (5).
wobei Schritt S2 umfasst:
- das Eintauchen von mindestens einem Abschnitt des Filzprodukts (10) in die Modifizierungslösung;
- das Beschleunigen einer Verdrängungsgeschwindigkeit der Modifizierungslösung und einer Säurelösung im Filzprodukt (10) und das Entsorgen in der Modifizierungsbox (21);
- das Extrahieren der Modifizierungslösung aus der Modifizierungsbox, das Erhitzen der extrahierten Modifizierungslösung und das Zurückführen der erhitzten Modifizierungslösung in die Modifizierungsbox (21); und
- das Sammeln der die Modifizierungslösung ergänzenden Modifizierungslösung und der die Modifizierungslösung ergänzenden Säurelösung in der Modifizierungsbox (21) und das Sammeln der durch Verdrängung erhaltenen Säurelösung.

## Revendications

1. Appareil de modification et de séchage de produits en feutre, comprenant :
un dispositif de déroulement (1), configuré pour supporter un rouleau de produit en feutre et dérouler le rouleau de produit en feutre ;
une machine à tunnel de modification (2), configurée pour modifier un produit en feutre (10) déroulé par le dispositif de déroulement (1) ;
un dispositif de pulvérisation de lavage à l'eau (3), configuré pour laver le produit en feutre (10) modifié par la machine à tunnel de modification (2) avec de l'eau ;
une machine à tunnel de séchage (4), configurée pour sécher le produit en feutre (10) lavé par le dispositif de pulvérisation de lavage à l'eau (3) avec de l'eau ;
un dispositif de roulement (5), configuré pour rouler le produit en feutre (10) séché par la machine à tunnel de séchage (4) ; et
un dispositif de transmission, pénétrant à travers la machine à tunnel de modification (2), le dispositif de pulvérisation de lavage à l'eau (3) et la machine à tunnel de séchage (4) et configuré pour transmettre le produit en feutre (10) déroulé par le dispositif de déroulement (1) pour passer séquentiellement à travers la machine à tunnel de modification (2), le dispositif de pulvérisation de lavage à l'eau (3) et la machine à tunnel de séchage (4),
dans lequel la machine à tunnel de modification (2) comprend :
une boîte de modification (21), dans laquelle une solution de modification est contenue dans la boîte de modification (21), et au moins une section du produit en feutre (10) sur le dispositif de transmission situé dans la boîte de modification (21) est immergée dans la solution de modification ;
au moins un dispositif à ultrasons (22), configuré pour accélérer une vitesse de déplacement de la solution de modification et d'une solution acide dans le produit en feutre (10) et disposé dans la boîte de modification (21) ;
un système de circulation et de chauffage de la solution de modification, relié à la boîte de modification (21) et configuré pour extraire la solution de modification de la boîte de modification (21), chauffer la solution de modification extraite et renvoyer la solution de modification chauffée dans la boîte de modification (21) ; et
un système d'alimentation en solution de modification et de collecte de la solution acide, relié à la boîte de modification (21) et configuré pour alimenter la boîte de modification (21) en solution de modification et collecter la solution acide obtenue par déplacement.

2. L'appareil de modification et de séchage des produits en feutre selon la revendication 1,
comprenant en outre :
un premier dispositif d'étanchéité à l'eau (6), situé entre le dispositif de déroulement (1) et la machine à tunnel de modification (2), relié à une entrée de produit en feutre de la machine à tunnel de modification (2), et configuré pour sceller l'entrée de produit en feutre de la machine à tunnel de modification (2) ; et
un deuxième dispositif d'étanchéité à l'eau (7), situé entre la machine à tunnel de séchage (4) et le dispositif de roulement (5), relié à une sortie de produit en feutre de la machine à tunnel de séchage (4), et configuré pour sceller la sortie de produit en feutre de la machine à tunnel de séchage (4), dans lequel
le produit en feutre (10) déroulé par le dispositif de déroulement (1) passe par le premier dispositif d'étanchéité à l'eau (6) et entre ensuite dans la machine à tunnel de modification (2) ;
le produit en feutre (10) sortant du tunnel de séchage (4) passe par le deuxième dispositif d'étanchéité (7) et est ensuite enroulé par le dispositif de roulement (5) ; et
une sortie de produit en feutre de la machine à tunnel de modification (2) et une entrée de produit en feutre du dispositif de pulvérisation de lavage à l'eau (3) sont connectées de manière étanche, et une sortie de produit en feutre du dispositif de pulvérisation de lavage à l'eau (3) et une entrée de produit en feutre de la machine à tunnel de séchage
(4) sont connectés de manière étanche.

3. L'appareil de modification et de séchage des produits en feutre selon la revendication 1, dans
lequel :
le système de circulation et de chauffage de solution de modification comprend un échangeur de chaleur à circulation (23), une entrée de solution et une sortie de solution de l'échangeur de chaleur à circulation (23) qui communiquent respectivement avec la boîte de modification (21) par l'intermédiaire de tuyaux d'échange de chaleur à circulation, une première unité de pompage est connectée sur le tuyau d'échange de chaleur de circulation relié à l'entrée de solution de l'échangeur de chaleur de circulation (23) de manière à permettre à la solution de modification dans la boîte de modification (21) d'entrer dans l'échangeur de chaleur de circulation (23) sous l'effet de la première unité de pompage et de retourner dans la boîte de modification (21) après avoir été chauffée par l'échangeur de chaleur de circulation (23), et le système de circulation et de chauffage de solution de modification comprend en outre un dispositif de filtrage de solution de modification (24) connecté entre la boîte de modification (21) et la première unité de pompage et configuré pour filtrer la solution de modification ;
le système de collecte de la solution de modification et de la solution acide comprend un réservoir de collecte de la solution acide (25), un réservoir de complément de la solution de modification (26), un dispositif de filtrage de la solution résiduelle (27), un échangeur de chaleur de complément de la solution (28) et au moins un réservoir de décantation de la solution acide (29), dans lequel le réservoir de décantation de solution acide (29) communique avec le fond de la boîte de modification (21) par l'intermédiaire d'une deuxième unité de pompage de manière à permettre à une solution résiduelle déposée au fond de la boîte de modification (21) d'entrer dans le réservoir de décantation de solution acide (29) par l'intermédiaire de la deuxième unité de pompage ; le dispositif de filtrage de solution résiduelle (27) est connecté entre la boîte de modification (21) et la deuxième unité de pompage de manière à filtrer la solution usée évacuée de la boîte de modification (21) à travers le dispositif de filtrage de solution résiduelle (27) ; le réservoir de collecte de solution acide (25) communique avec le fond du réservoir de décantation de solution acide (29) par l'intermédiaire d'une troisième unité de pompage de manière à collecter la solution acide déposée au fond du réservoir de décantation de solution acide (29) par l'intermédiaire du réservoir de collecte de solution acide (25) ; et une entrée de solution du réservoir de complément de solution de modification (26) communique avec le haut du réservoir de décantation de solution acide (29) par l'intermédiaire d'une quatrième unité de pompage de manière à récupérer la solution de modification flottant au niveau d'une partie d'extrémité supérieure du réservoir de décantation de solution acide (29), l'entrée de solution du réservoir de complément de solution de modification (26) communique en outre avec le système de complément de solution de modification externe, une sortie de solution du réservoir de complément de solution de modification (26) communique avec une entrée de solution de l'échangeur de chaleur de complément de solution (28) par l'intermédiaire d'une cinquième unité de pompe, une sortie de solution de l'échangeur de chaleur de complément de solution (28) communique avec une extrémité de tête de la boîte de modification (21), la sortie de solution du réservoir de complément de solution de modification (26) communique en outre avec une extrémité de la boîte de modification (21) par l'intermédiaire d'un tuyau de complément de solution, et les extrémités supérieures du réservoir de décantation de solution acide (29) et du réservoir de collecte de solution acide (25) communiquent respectivement avec le tuyau de complément de solution.

4. Appareil de modification et de séchage des produits en feutre selon la revendication 1, dans lequel le dispositif de pulvérisation de l'eau de lavage (3) comprend :
une boîte de pulvérisation (31) ;
un dispositif de pulvérisation, disposé dans la boîte de pulvérisation (31) et configuré pour pulvériser de l'eau sur le produit en feutre (10) sur le dispositif de transmission situé dans le dispositif de pulvérisation de lavage à l'eau (3) ;
un dispositif de filtrage de l'eau de pulvérisation (32), dans lequel une extrémité d'entrée d'eau du dispositif de filtrage de l'eau de pulvérisation (32) communique avec une extrémité inférieure de la boîte de pulvérisation (31) ;
un dispositif de collecte de l'eau (33), communiquant avec une extrémité de sortie d'eau du dispositif de filtrage de l'eau de pulvérisation (32) et communiquant avec le dispositif de pulvérisation par l'intermédiaire d'une pompe de circulation de manière à fournir de l'eau par le dispositif de collecte de l'eau (33) au dispositif de pulvérisation par l'intermédiaire de la pompe de circulation ; et
un dispositif automatique d'appoint en eau, relié au dispositif de collecte de l'eau (33) et configuré pour fournir de l'eau au dispositif de collecte de l'eau (33), dans lequel
le dispositif de pulvérisation comprend un tuyau d'alimentation en eau et un groupe de pulvérisateurs (34) communiquant respectivement avec le tuyau d'alimentation en eau, le groupe de pulvérisateurs (34) étant divisé en deux groupes, un groupe de pulvérisateurs (34) est situé au-dessus du produit en feutre (10) et est configuré pour pulvériser de l'eau sur une surface supérieure du produit en feutre (10), et l'autre groupe de pulvérisateurs (34) est situé sous le produit en feutre (10) et est configuré pour pulvériser de l'eau sur une surface inférieure du produit en feutre (10).

5. Appareil de modification et de séchage de produits en feutre selon la revendication 1, dans lequel la machine à tunnel de séchage (4) comprend :
une boîte de séchage (41) ;
au moins un dispositif de pulvérisation d'air chaud, configuré pour pulvériser de l'air chaud sur le produit en feutre (10) sur le dispositif de transmission situé dans la boîte de séchage (41), disposé dans la boîte de séchage (41), et comprenant un groupe de tuyaux de pulvérisation d'air chaud supérieur (42) configuré pour pulvériser de l'air chaud sur la surface supérieure du produit en feutre (10) et un groupe de tuyaux de pulvérisation d'air chaud inférieur (43) configuré pour pulvériser de l'air chaud sur la surface inférieure du produit en feutre (10), dans lequel le groupe de tuyaux de pulvérisation d'air chaud supérieur (42) et le groupe de tuyaux de pulvérisation d'air chaud inférieur (43) comprennent chacun plusieurs tuyaux de pulvérisation d'air chaud ;
un système de circulation principal, connecté entre la boîte de séchage (41) et le dispositif de pulvérisation d'air chaud et configuré pour extraire l'air de la boîte de séchage (41), chauffer l'air extrait en air chaud et fournir l'air chaud au dispositif de pulvérisation d'air chaud ; et
un système de circulation ramifié, connecté à la boîte de séchage (41) et configuré pour extraire l'air de la boîte de séchage (41) et condenser l'air extrait pour collecter les condensats.

6. L'appareil de modification et de séchage des produits en feutre selon la revendication 5, dans
lequel :
le système de circulation principal comprend au moins un ensemble de circulation principal, l'ensemble de circulation principal comprenant un ventilateur de circulation principal (44) et un élément chauffant (45), le ventilateur de circulation principal (44) est connecté entre la boîte de séchage (41) et une entrée d'air de l'élément chauffant (45) de manière à extraire l'air par le ventilateur de circulation principal (44) de la boîte de séchage (41) vers l'élément chauffant (45), et une sortie d'air de l'élément chauffant (45) communique avec le dispositif de pulvérisation d'air chaud de manière à chauffer l'air extrait dans l'élément chauffant (45) par l'élément chauffant (45) et à transmettre l'air au dispositif de pulvérisation d'air chaud ; et
le système de circulation ramifiée comprend un système de récupération de condensat (49) et au moins un ensemble de circulation ramifiée, l'ensemble de circulation ramifiée comprenant un ventilateur de circulation ramifiée (46) et un condenseur (47), le ventilateur de circulation ramifié (46) est connecté entre la boîte de séchage (41) et une entrée d'air du condenseur (47) de manière à extraire l'air par le ventilateur de circulation ramifié (46) de la boîte de séchage (41) vers le condenseur (47), le condenseur (47) est configuré pour condenser les condensats de l'air extrait dans le condenseur, le système de récupération de condensat (49) communique avec une sortie de condensat du condenseur (47) de manière à collecter les condensats, une sortie d'air du condenseur (47) communique également avec le ventilateur de circulation principal (44) de manière à extraire l'air froid générant des condensats à travers le ventilateur de circulation principal (44) dans l'élément chauffant (45) à chauffer.

7. Appareil de modification et de séchage de produits en feutre selon la revendication 2, dans lequel le premier dispositif d'étanchéité à l'eau (6) et le second dispositif d'étanchéité à l'eau (7) comprennent chacun un réservoir d'eau, le réservoir d'eau est pourvu d'un passage en forme de V (81), une ouverture d'alimentation (82) communiquant avec une partie de l'extrémité du passage en forme de V (81), et une ouverture de décharge (83) communiquant avec l'autre extrémité du passage en forme de V (81), le produit en feutre (10) entre dans le passage en forme de V (81) par l'ouverture d'alimentation (82) et sort par l'ouverture de décharge (83), et de l'eau pour isoler et sceller l'ouverture d'alimentation (82) et l'ouverture de décharge (83) est contenue dans le passage en forme de V (81), dans lequel
l'ouverture de décharge (83) du premier dispositif d'étanchéité à l'eau (6) est reliée de manière étanche à l'entrée du produit en feutre de la machine à tunnel de modification (2) ;
l'ouverture d'alimentation (82) du deuxième dispositif d'étanchéité à l'eau (7) est reliée de manière étanche à la sortie du produit en feutre de la machine à tunnel de séchage (4) ;
une pluralité de rouleaux de support (84) configurés pour supporter le produit en feutre (10) sont supportés de manière rotative dans le passage en forme de V (81) le long d'une direction d'extension du passage en forme de V (81) ; et
deux rouleaux de presse (88) configurés pour sertir le produit en feutre (10) sont supportés de manière rotative dans une position de flexion à l'intérieur du passage en forme de V (81), un rouleau de presse (88) est situé sur le côté gauche du rouleau de support le plus bas (84), et l'autre rouleau de presse (88) est situé sur le côté droit du rouleau de support le plus bas (84).

8. Appareil de modification et de séchage de produit en feutre selon la revendication 1, comprenant en outre un dispositif de collecte de poussière (9) disposé sur le dispositif de roulement (5) et configuré pour collecter la poussière générée lors d'un processus de roulement du produit en feutre (10).

9. Procédé de travail pour l'appareil de modification et de séchage de produits en feutre tel que défini dans l'une quelconque des revendications 1 à 8, comprenant les étapes suivantes :
étape S1 : déroulement, par le dispositif de déroulement (1), d'un rouleau de produit en feutre ;
étape S2 : modification, par la machine à tunnel de modification (2), d'un produit en feutre (10) déroulé par le dispositif de déroulement (1) ;
étape S3 : lavage, par le dispositif de pulvérisation de lavage à l'eau (3), du produit en feutre (10) modifié par la machine à tunnel de modification (2) avec de l'eau ;
étape S4 : séchage, par la machine à tunnel de séchage (4), du produit en feutre (10) lavé par le dispositif de pulvérisation de lavage à l'eau (3) avec de l'eau ; et
étape S5 : roulement, par le dispositif de roulement (5), du produit en feutre (10) séché par la machine à tunnel de séchage (4).
dans lequel l'étape S2 comprend le fait :
- d'immerger au moins une section du produit en feutre (10) dans la solution de modification ;
- d'accélérer une vitesse de déplacement de la solution de modification et d'une solution acide dans le produit en feutre (10) et les disposer dans la boîte de modification (21) ;
- d'extraire la solution de modification de la boîte de modification, de chauffer la solution de modification extraite et de renvoyer la solution de modification chauffée dans la boîte de modification (21) ; et
- de collecter la solution de modification d'appoint et la solution acide complétant la solution de modification dans la boîte de modification (21) et de recueillir la solution acide obtenue par déplacement.
